# FASCICULE DE BREVET EUROPEEN

(11) **EP 0 472 476 B1**
(45) Date de publication et mention de la délivrance du brevet: **07.12.1994**
(21) Numéro de dépôt: 91420268.4
(22) Date de dépôt: 23.07.1991
(51) Int. Cl.: B01D 71/02, B01D 69/10, B01D 67/00, B01D 69/04, C04B 35/52

(54) **Procédé de fabrication d'une membrane minérale ultra-mince et asymétrique**
Verfahren zur Herstellung einer asymmetrischen, ultradünnen, mineralischen Membran
Process for the production of a asymmetric ultrathin mineral membrane

(30) Priorité: 24.07.1990 FR 9009999
(43) Date de publication de la demande: 26.02.1992
(73) Titulaire: LE CARBONE LORRAINE, 92400 Courbevoie (FR)
(72) Inventeur: Bauer, Jean-Michel, F-54530 Pagny S/Moselle (FR)
(74) Mandataire: Séraphin, Léon

(56) Documents cités:
- EP-A- 0 208 629
- EP-A- 0 250 346
- EP-A- 0 315 453
- EP-A- 0 368 003
- FR-A- 2 110 123
- FR-A- 2 585 965
- US-A- 4 412 921

## Description

### DOMAINE DE L'INVENTION

L'invention a pour objet la fabrication de membranes minérales poreuses et perméables, utilisables sur supports minéraux poreux et perméables. Ces membranes sont destinées à être employées en techniques séparatives et, plus particulièrement, en microfiltration et ultrafiltration. Par membranes minérales, on entend essentiellement des membranes céramiques ou des membranes carbonées.

### ETAT DE LA TECHNIQUE

Les membranes minérales, par opposition aux membranes organiques, ou à matrice organique, permettent de réaliser la filtration de fluides chauds et corrosifs. C'est là leur intérêt essentiel.
On connaît des procédés de fabrication de membranes céramiques ou carbonées :
Des membranes céramiques peuvent être obtenues par dépôt sur un support poreux d'une couche de barbotine chargée en grains fins de matière minérale, dépôt suivi d'un séchage et d'une cuisson à un température assez haute pour fritter les grains de matière minérale. Un tel procédé est décrit dans la demande européenne EP-A-092 840.
Des membranes carbonées peuvent être obtenues selon le brevet européen EP-B-250 346 en déposant par engobage sur un support poreux, une émulsion comprenant des particules carbonées et une résine thermodurcissable donnant un taux de coke élevé à la cokéfaction, le dépôt étant suivi d'un traitement de polycondensation de la résine puis de cokéfaction.

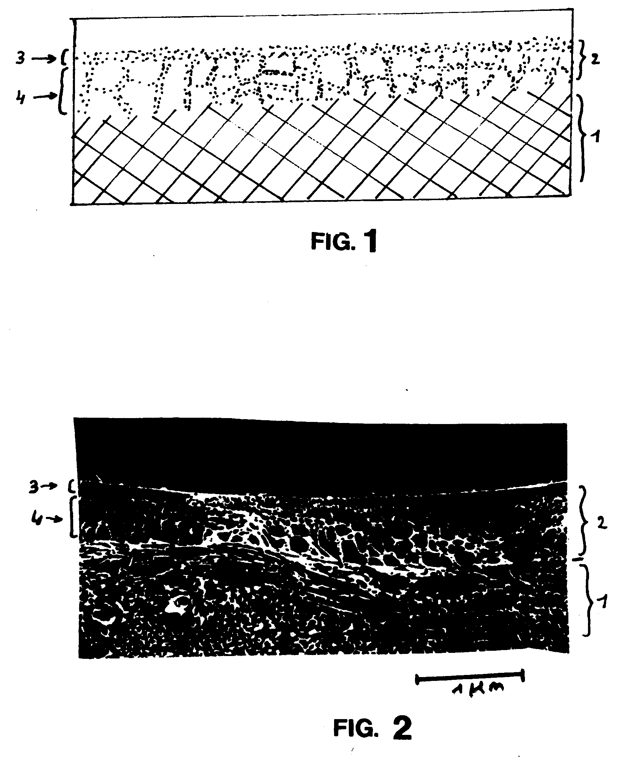

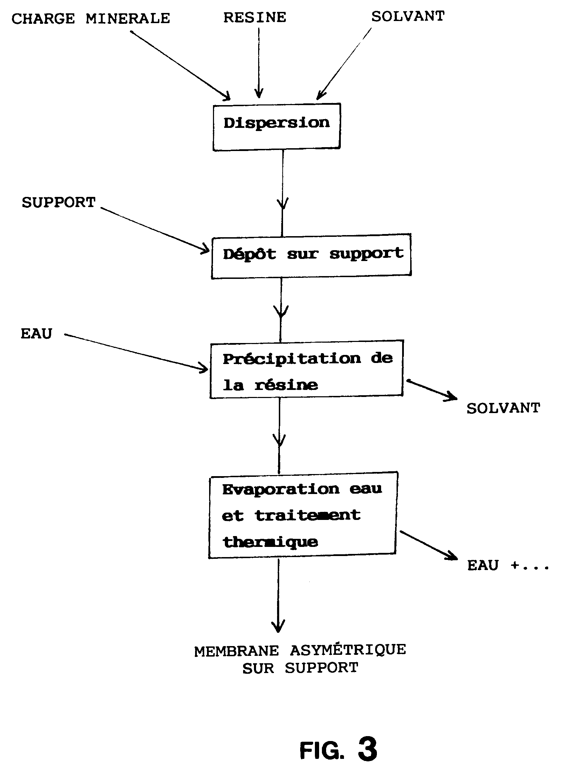

La demande de brevet EP-A-0 315 453 décrit une méthode de préparation de membranes poreuses en partant d'une dispersion de fines particules de silice ou d'oxydes métalliques dans un polymère approprié, laquelle est mise en forme, puis carbonisée en atmosphère non oxydante et finalement frittée (avec réaction partielle du C sur la silice ou les oxydes métalliques donnant naissance à des espèces volatiles). Il est cependant clair d'après les figures 1 et 3 de cette demande que la couche poreuse obtenue possède des pores ayant une taille et une répartition sensiblement homogène.

La demande de brevet EP-A-0 368 003 concerne une méthode de préparation d'une couche poreuse organique asymétrique par dissolution d'un polymère PEEK dans un solvant acide non sulfonant, mise en forme de ladite solution, coagulation du polymère PEEK dans un bain non solvant pour le polymère mais solvant pour l'acide, et élimination de l'acide par lavage. Cette méthode conduit évidemment à une couche dissymétrique mais purement organique.

### PROBLEME POSE ET OBJET DE L'INVENTION

Le défaut essentiel des membranes de l'art antérieur réside dans l'épaisseur de la membrane qui limite sa perméabilité. Ces fortes épaisseurs résultent de la nécessité d'avoir une membrane de caractéristiques mécaniques suffisantes, ou encore des limites des techniques de dépôt qui ne permettent pas d'obtenir une couche d'épaisseur faible et constante. Des solutions ont été apportées pour améliorer la perméabilité des membranes, notamment en réalisant des membranes asymétriques par dépôt, sur un support poreux, de couches successives comportant des particules minérales de granulométrie décroissante, code indiqué par exemple dans le brevet européen EP-B-250 346.
Dans le meilleur des cas, la couche active de la membrane présente des épaisseurs supérieures à 2 µm, la couche active d'une membrane asymétrique étant celle de plus petit diamètre poreux.
L'objet premier de l'invention est un procédé permettant de fabriquer une membrane minérale asymétrique ayant une couche active d'épaisseur considérablement réduite par rapport à l'art antérieur et donc de très grande perméabilité.

### DESCRIPTION DE L'INVENTION

Le procédé de fabrication d'une membrane minérale selon l'invention comporte la préparation d'une dispersion fluide comprenant une charge de matériaux inorganiques finement divisés et une résine cokéfiable, le dépôt de cette dispersion sur un support minéral éventuellement non-poreux, mécaniquement solide, de manière à former une couche, le traitement thermique dudit support revêtu de ladite couche de manière à cokéfier la résine, et est caractérisé en ce que, de manière à obtenir, en un seul dépôt, une membrane asymétrique ayant une couche active de faible épaisseur,
- on prépare une dispersion fluide comprenant un matériau inorganique finement divisé, un solvant organique soluble dans l'eau, une résine insoluble dans l'eau mais soluble dans le solvant organique et donnant après cokéfaction un taux de coke supérieur à 20 % en poids,
- on dépose une couche de ladite dispersion sur ledit support minéral,
- on met ladite couche en contact avec de l'eau de manière à déplacer tout ou partie dudit solvant organique de la couche par de l'eau et à précipiter la résine,
- on traite thermiquement de manière à cokéfier la résine, et éventuellement le support.

L'invention sera mieux comprise en considérant la figure 1 qui schématise le résultat obtenu : la membrane (2), déposée sur un support minéral poreux (1), n'a pas un diamètre poreux uniforme selon l'axe de filtration perpendiculaire à la membrane. Elle comprend une partie externe (3) à pores très fins et de faible épaisseur, et une partie interne (4) de plus grande épaisseur et à pores plus grossiers.
Ainsi, l'invention permet de résoudre le problème posé d'une manière particulièrement simple en reprenant les techniques de dépôt de l'art antérieur mais en mettant en oeuvre des phénomènes physico-chimiques particuliers.

Parmi les solvants de l'invention solubles dans l'eau, on choisira de préférence des solvants totalement miscibles à l'eau, et parmi ceux-ci, de préférence, le dioxane et le diméthylformamide (DMF). Le choix du solvant et celui de la résine sont liés, la résine devant être soluble dans le solvant mais non dans l'eau, et de préférence totalement soluble dans le solvant.
Des essais ont montré que des résines thermodurcissables telles que les résine phénoliques ou furaniques ne convenaient pas car solubles dans l'eau. Par contre des résines thermoplastiques telles que la polyacrylonitrile, soluble dans le DMF, le chlorure de polyvinylidène soluble à chaud dans le dioxane sont préférées selon l'invention, mais on peut aussi utiliser d'autres résines thermoplastiques, par exemple une résine de copolymère styrène-acrylonitrile ou de méthacrylate de méthyle solubles dans l'acétone. Toutes les résines solubles dans un solvant hydrosoluble ne conduisent pas exactement au même résultat, sans doute à cause des différences physico-chimiques entre les résines, par exemple le caractère plus ou moins polaire, qui peut influencer la manière dont la résine précipitera au contact de l'eau en formant une structure qui se rapprochera plus ou moins de celle de la membrane (2) de la figure 1.

Les matériaux inorganiques utilisés corne charge et constituant de la dispersion selon l'invention ne sont pas spécifiques à l'invention. Ce sont de fines poudres de matériaux céramique (zircone, alumine, carbure de silicium etc...), ou de matériaux carbonés (poudres de coke, de noir de carbone, de graphite, fibres de carbone finement broyées, etc...), de taille particulaire moyenne comprise entre 0,1 et 10 µm.

La préparation de la dispersion de matériaux inorganiques dans la solution de résine dans le solvant hydrosoluble est réalisée de manière connue en elle-même en faisant éventuellement appel à des adjuvants permettant de contrôler les propriétés de la dispersion, par exemple, sa viscosité, sa stabilité dans le temps.
On peut utiliser des mélanges de solvants, des mélanges de résines, sous réserve que les conditions de solubilité soient respectées, ainsi que des mélanges de matériaux inorganiques.
Les proportions des différents constituants de la dispersion ne sont pas critiques, mais pour des raisons évidentes d'économie, on choisit une teneur en résine et en matériau inorganique la plus élevées possible compatible avec une fluidité suffisante. Cependant, le rapport pondéral entre le matériau inorganique et la résine doit être compris entre 0,5 et 15 et de préférence compris entre 2 et 10 afin que la membrane ait une tenue mécanique suffisante.
La dispersion obtenue selon l'invention est déposée par tout moyen connu sur un support poreux, qui pourra être en céramique, en carbone polygranulaire, en métaux frittés, mais de préférence en composite carbone-carbone, objet du brevet européen EP-B-208 629. Ce dernier support présente l'avantage d'être lui-même mince (1 mm) et de hautes caractéristiques mécaniques. En outre, sa porosité ajustable est particulièrement adaptée à l'invention.
Il est également possible de déposer une couche de la dispersion sur un support non-poreux précurseur d'un support poreux : en effet, le support poreux décrit dans le brevet européen EP-B-208 629 est obtenu par imprégnation d'un substrat fibreux par une résine de type phénolique, suivie d'une mise en forme, d'une polymérisation et d'une carbonisation, la porosité n'apparaissant qu'au cours de cette dernière étape. Il est donc intéressant d'un point de vue économique de déposer une couche de dispersion selon l'invention sur un support à substrat carboné et à matrice polymérisée et de réaliser ultérieurement un traitement thermique comportant une carbonisation commune de la membrane et de son support.

Après dépôt sur le support poreux, la couche de dispersion est mise en contact avec de l'eau de manière à faire précipiter la résine en formant la structure asymétrique schématisée à la figure 1 (couche 2). Il importe que la quantité d'eau soit suffisante (lavage à l'eau) pour que le mélange eau-solvant résultant ne dissolve pratiquement plus la résine.
En pratique, la couche déposée, à ce stade, est imprégnée d'eau ne contenant plus que de faibles quantités de solvant organique, quantités suffisamment faibles pour qu'il n'y ait pas, lors du chauffage du traitement thermique, une reconcentration en solvant qui redissoudrait éventuellement la résine.

Le traitement thermique auquel est soumis le support poreux, muni de sa couche de résine précipitée chargée de matériau inorganique, comporte une étape de séchage pour éliminer l'eau et les solvants résiduels, une étape éventuelle d'oxydation ménagée vers 200-300°C, une étape de cokéfaction en atmosphère neutre à une température allant de 700 à 1300°C.

Il est surprenant de constater qu'après ce traitement thermique qui aurait du "effondrer" la couche (2) à cause de la nature thermoplastique de la résine, la structure asymétrique a été conservée et que la membrane obtenue comporte une partie active (3) dont l'épaisseur est très faible, inférieure à 0,1 µm, alors que l'épaisseur totale de la membrane est bien supérieure, et par exemple de l'ordre de 2 µm.
On obtient ainsi des membranes minérales ultra-minces asymétriques de grande perméabilité particulièrement intéressantes en microfiltration et en ultrafiltration. Par ailleurs, le procédé selon l'invention n'entraîne pas de surcoût significatif par rapport à l'art antérieur et peut même dans certains cas être moins onéreux, notamment lorsqu'on effectue un seul traitement thermique commun à la membrane et à son support en composite carbone-carbone.

### DESCRIPTION DES FIGURES

La figure 1 schématise en coupe transversale une membrane (2) sur son support (1), avec une partie active (3) de faible épaisseur et à pores de petit diamètre et une partie (4) d'épaisseur et de porosité comparativement plus élevés.

La figure 2 est une photo d'une membrane sur son support obtenue selon l'exemple 1.

La figure 3 schématise l'ensemble des étapes du procédé selon l'invention.

### EXEMPLES

### Exemple 1

On prépare une dispersion fluide, dans le diméthylformamide (DMF), de poudre de carbone 0,5 µm de taille particulaire moyenne et de polyacrylonitrile dans le rapport pondéral poudre de carbone/ polyacrylonitrile = 9.
On dépose cette dispersion sur la surface intérieure d'un tube poreux en matériau composite, en remplissant le tube puis en le vidant de manière à former une couche adhérente. On introduit d'abord progressivement de l'eau dans le tube, puis une fois que la couche déposée a flocculé, on lave à l'eau.
On sèche le tube en étuve et on le porte à 250°C, température à laquelle la résine subit une oxydation ménagée par l'oxygène de l'air ambiant. On met le tube ensuite sous atmosphère neutre et on le cokéfie à 800°C.
On obtient une membrane de grande perméabilité dont la partie active a une épaisseur de l'ordre de 0,1 µm.

### Exemple 2

Cet exemple est analogue au précédent, sauf en ce que :
- la résine est le chlorure de polyvinylidène,
- le solvant est le dioxane,
- le matériau minéral est une poudre de zircone de taille particulaire moyenne de 0,1 µm,
- le rapport pondéral poudre de zircone/chlorure de polyvinylidène est de 4,
- le traitement thermique ne comporte pas d'oxydation ménagée à 250°C.
On obtient une membrane semblable à celle de l'exemple 1.

## Revendications

1. Procédé de fabrication d'une membrane minérale asymétrique ayant une couche active de faible épaisseur comportant :
- la préparation d'une dispersion fluide comprenant un matériau inorganique finement divisé, un solvant organique soluble dans l'eau, une résine insoluble dans l'eau mais soluble dans le solvant organique et donnant après cokéfaction un taux de coke supérieur à 20 % en poids
- le dépôt d'une couche de ladite dispersion sur un support minéral
- la mise en contact de ladite couche avec de l'eau de manière à déplacer tout ou partie dudit solvant organique de la couche par de l'eau et à précipiter la résine
- le traitement thermique de manière à cokéfier la résine et éventuellement le support.

2. Procédé selon la revendication 1 dans lequel le rapport pondéral entre ledit matériau inorganique et ladite résine est compris entre 0,5 et 15.

3. Procédé selon la revendication 2 dans lequel le rapport pondéral entre ledit matériau inorganique et ladite résine est de préférence compris entre 2 et 10.

4. Procédé selon une quelconque des revendications 1 à 3 dans lequel ledit matériau inorganique est une poudre de matériau céramique ou carboné de taille particulaire moyenne comprise entre 0,05 et 10 µm.

5. Procédé selon la revendication 4 dans lequel ledit matériau inorganique est une poudre de zircone, d'alumine, de carbure de silicium, de coke, de noir de carbone, de graphite, de fibres de carbone finement broyées.

6. Procédé selon une quelconque des revendications 1 à 5 dans lequel le support minéral est un support poreux en céramique, en carbone polygranulaire, en métal fritté, en composite carbone-carbone.

7. Procédé selon une quelconque des revendications 1 à 5 dans lequel le support minéral est non-poreux et constitué d'un composite à substrat fibreux en fibre ou précurseur de fibre de carbone et à matrice en résine cokéfiable polymérisée.

8. Procédé selon une quelconque des revendications 1 à 7 dans lequel la résine est du polyacrylonitrile et le solvant organique est le diméthylformamide

9. Procédé selon la revendication 8 dans lequel le traitement thermique comporte une étape d'oxydation ménagée entre 200 et 300°C.

10. Procédé selon une quelconque des revendications 1 à 7 dans lequel la résine est le chlorure de polyvinylidène et le solvant est le dioxane.

## Claims

1. Process for producing an asymmetric mineral membrane having an active layer of small thickness comprising
- the preparation of a fluid dispersion containing a finely divided inorganic material, a water-soluble organic solvent, a resin insoluble in water but soluble in the organic solvent and, after coking giving a coke content higher than 20% by weight
- the deposition of a layer of said dispersion onto a mineral support
- the placing of said layer in contact with water so as to displace all or some of said organic solvent from the layer by means of water and to precipitate the resin
- thermal treatment so as to coke the resin and, if appropriate, the support.

2. Process according to claim 1, wherein the weight ratio between the said inorganic material and the said resin is between 0.5 and 15.

3. Process according to claim 2, wherein the weight ratio between the said inorganic material and the said resin is preferably between 2 and 10.

4. Process according to any one of claims 1 to 3, wherein the said inorganic material is a powder of ceramic or carbon-containing material of a mean particle size of between 0.05 and 10 µm.

5. Process according to claim 4, wherein the said inorganic material is a powder of zirconia, of alumina, of silicon carbide, of coke, of carbon black, of graphite or of finely crushed carbon fibres.

6. Process according to any one of claims 1 to 5, wherein the mineral support is a porous support of ceramic, of polygranular carbon, of sintered metal or of carbon-carbon composite.

7. Process according to any one of claims 1 to 5, wherein the material support is non-porous and consists of a composite with a fibrous substrate of carbon fibre or a precursor of carbon fibre and with a matrix of polymerized coking resin.

8. Process according to any one of claims 1 to 7, wherein the resin is polyacrylonitrile and the organic solvent is dimethylformamide.

9. Process according to claim 8, wherein the thermal treatment involves an oxidation step carried out between 200 and 300°C.

10. Process according to any one of claims 1 to 7, wherein the resin is polyvinylidene chloride and the solvent is dioxane.

## Patentansprüche

1. Verfahren zur Herstellung einer asymmetrischen mineralischen Membran mit einer aktiven Schicht geringer Dicke, das aufweist:
- Die Herstellung einer fluiden Dispersion aus einem fein unterteilten anorganischen Material, einem in Wasser löslichen organischen Lösungsmittel und einem in Wasser unlöslichen, jedoch im organischen Lösungsmittel löslichen Kunstharz, das nach Verkokung einen Koksgehalt über 20 Gew-% ergibt;
- die Abscheidung einer Schicht der Dispersion auf einem mineralischen Träger;
- das Bringen der Schicht in Kontakt mit Wasser derart, um die Gesamtheit oder einen Teil des organischen Lösungsmittels der Schicht durch das Wasser zu verdrängen und das Kunstharz auszufällen; und
- die Wärmebehandlung derart, um das Kunstharz und eventuell den Träger zu verkoken.

2. Verfahren nach dem Anspruch 1,
bei dem das Gewichtsverhältnis zwischem dem anorganischen Material und dem Kunstharz im Bereich von 0,5 bis 15 ist.

3. Verfahren nach dem Anspruch 2,
bei dem das Gewichtsverhältnis zwischen dem anorganischen Material und dem Kunstharz vorzugsweise im Bereich von 2 bis 10 ist.

4. Verfahren nach irgendeinem der Ansprüche 1 bis 3,
bei dem das anorganische Material ein Pulver von keramischem oder kohlenstoffhaltigem Material einer mittleren Teilchengröße im Bereich von 0,05 bis 10 µm ist.

5. Verfahren nach dem Anspruch 4,
bei dem das anorganische Material ein Pulver von Zirkoniumoxid, Aluminiumoxid, Siliziumcarbid, Koks, Ruß, Graphit oder fein zerkleinerten Kohlenstoffasern ist.

6. Verfahren nach irgendeinem der Ansprüche 1 bis 5,
bei dem der mineralische Träger ein poröser Träger aus Keramik, aus vielkörnigem Kohlenstoff, aus gesintertem Metall oder aus Kohlenstoff-Kohlenstoff-Verbund ist.

7. Verfahren nach irgendeinem der Ansprüche 1 bis 5,
bei dem der mineralische Träger nichtporös ist und aus einem Verbund mit faserförmigem Substrat aus Kohlenstoffaser oder Kohlenstoffaservorläufer und mit Matrix aus verkokbarem polymerisiertem Kunstharz besteht.

8. Verfahren nach irgendeinem der Ansprüche 1 bis 7,
bei dem das Kunstharz Polyacrylnitril ist und das organische Lösungsmittel Dimethylformamid ist.

9. Verfahren nach dem Anspruch 8,
bei dem die Wärmebehandlung einen Schritt milder Oxidation zwischen 200 und 300° C aufweist.

10. Verfahren nach irgendeinem der Ansprüche 1 bis 7,
bei dem das Kunstharz Polyvinyliden ist und das Lösungsmittel Dioxan ist.
